# EUROPEAN PATENT SPECIFICATION

(11) **EP 4 091 795 B1**
(45) Date of publication and mention of the grant of the patent: **19.06.2024**
(21) Application number: 21741900.1
(22) Date of filing: 12.01.2021
(51) Int. Cl.: B29C 51/14, B32B 27/36, B32B 27/40, B32B 33/00, B29C 59/02, B29C 51/00, B29C 51/02, B29C 51/10, B29K 35/00, B29K 69/00, B29K 75/00, B29L 21/00

(54) **RESIN SHEET HAVING HAIR-LIKE BODIES AND MOLDED ARTICLE THEREOF**
HARZBLATT MIT HAARÄHNLICHEN KÖRPER UND FORMTEIL DARAUS
FEUILLE DE RÉSINE AYANT DES CORPS EN FORME DE CHEVEUX ET ARTICLE MOULÉ DE CELLE-CI

(30) Priority: 15.01.2020 JP 2020004184
(43) Date of publication of application: 23.11.2022
(73) Proprietor: Denka Company Limited, Tokyo 103-8338 (JP)
(72) Inventor: TOYAMA, Hiroko, Tokyo 103-8338 (JP); MAEDA, Keishi, Tokyo 103-8338 (JP)
(74) Representative: Kraus & Lederer PartGmbB
(86) International application number: PCT/JP2021/000602
(87) International publication number: WO 2021/145295

(56) References cited:
- WO-A1-2015/159825
- WO-A1-2018/016562
- WO-A1-2019/049897
- WO-A1-2019/146635
- DE-A1- 19 843 109
- JP-A- H 071 626
- US-A1- 2019 283 301

## Description

### TECHNICAL FIELD

The present invention pertains to a resin sheet having hair-like bodies and a molded article thereof.

### BACKGROUND

Conventionally, sheets of paper and polymer materials are used as interior materials of automobiles and the housings of associated components, housings of electronic devices and home appliances, building materials such as wallpaper, housings for toys and game consoles, and members of daily commodities. Further, as a method to provide a good tactile sensation to a surface of a sheet, Patent Document 1, for example, presents a resin sheet having hair-like bodies arranged regularly on a surface thereof.
Meanwhile, when used as interior articles such as dashboard and sheets for automobiles, ultraviolet-induced yellowing may become a problem.

Related prior art is described in documents WO2018/016562A, US2019/283301 A1, DE19843109A1 and WO2015/159825A1.

### SUMMARY OF THE INVENTION

### TECHNICAL PROBLEM

Accordingly, resin sheets using a thermoplastic polyurethane resin as a light-resistant material in the outermost surface layer have been proposed. However, such sheets were found to have problems in that when cosmetics, such as sunscreen cream applied to the skin adhere to the resin sheets, appearance abnormalities such as cracks and wrinkles occur in the outermost surface layer. The present invention addresses the technical problem of providing a resin sheet having good tactile sensation, light resistance, and chemical resistance, and a molded article thereof.

### SOLUTION TO PROBLEM

That is, as a result of having investigated various means, the present inventors discovered that for a resin sheet having: a surface layer having hair-like bodies arranged regularly on one surface thereof; and a second layer directly laminated to the surface layer, by using as a material for the second layer, a polymer alloy resin of a polycarbonate-based resin and a polyester-based resin, without changing the thermoplastic polyurethane resin, i.e., a material in the surface layer, the occurrence of cracks and wrinkles is suppressed even when sunscreen cream is applied. This led to the completion of the present invention.

The present invention, which solves the above problem, is configured as follows.
(1) A resin sheet having: a surface layer having hair-like bodies arranged regularly on one surface thereof; and a second layer directly laminated to the surface opposite that of the hair-like bodies of the surface layer, the surface layer containing a thermoplastic polyurethane resin and the second layer containing a polymer alloy resin of a polycarbonate-based resin and a polyester-based resin.
(2) The resin sheet described in (1), wherein the thermoplastic polyurethane resin contains a hexamethylene diisocyanate (HDI) and a carbonate-based polyol as raw materials.
(3) The resin sheet described in (1) or (2), wherein the resin sheet further has a substrate layer on a surface of the second layer opposite the surface to which the surface layer is laminated.
(4) The resin sheet described in any one of (1) to (3), wherein the hair-like bodies have an average height of 30 µm or more and 500 µm or less, an average diameter of 1 µm or more and 50 µm or less, and an average spacing, between the hair-like bodies, of 20 µm or more and 200 µm or less.
(5) A molded article of the resin sheet described in any one of (1) to (4).
(6) The molded article described in (5), wherein the molded article is molded on a surface of an automobile interior material, an electronic device, an electronic device cladding, a cosmetic container, or a container member.
(7) A method for manufacturing the molded article described in (5) or (6), the method including vacuum molding, insert molding, or in-mold molding the resin sheet described in any one of (1) to (4).

### EFFECTS OF INVENTION

According to the present invention, a resin sheet having good tactile sensation, light resistance, and chemical resistance, and a molded article thereof can be provided.

### BRIEF DESCRIPTION OF DRAWINGS

FIG. 1 is a vertical side cross-sectional schematic view showing a resin sheet according to a first embodiment of the present invention.
FIG. 2 is a schematic plan view of the resin sheet of FIG. 1.
FIG. 3 is a vertical side cross-sectional schematic view showing the layer structure of a resin sheet according to a second embodiment of the present invention.

### DESCRIPTION OF EMBODIMENTS

Below, various embodiments of the resin sheet are described, followed by a description of the method for manufacturing the resin sheet, but in cases where the specific description provided for one embodiment applies to another embodiment, the corresponding description for the other embodiment is omitted.

### [First Embodiment]

The resin sheet according to a first embodiment of the present invention is a resin sheet having: a surface layer having hair-like bodies arranged regularly on one surface thereof; and a second layer directly laminated to the surface opposite that of the hair-like bodies of the surface layer, the surface layer containing a thermoplastic polyurethane resin and the second layer containing a polymer alloy resin of a polycarbonate-based resin and a polyester-based resin.

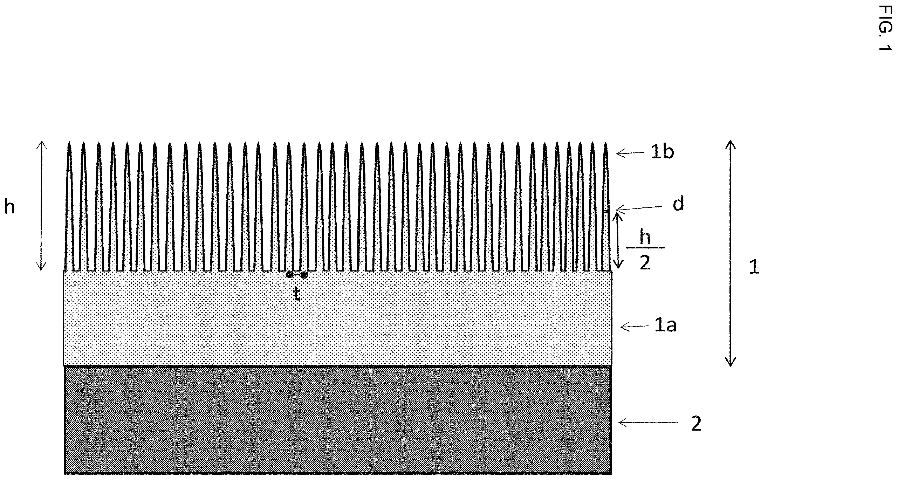

As shown in FIG. 1, the hair-like bodies and the surface layer, and the second layer are directly laminated. That is, the layer configuration of the resin sheet according to the first embodiment is, from top to bottom, the hair-like bodies and the surface layer/the second layer.

### <Surface Layer>

A surface layer (1a) is a layer serving as a base for hair-like bodies and of what is denoted by reference sign 1, refers to the portion other than the hair-like bodies 1b on the surface. The thickness of the surface layer refers to the thickness from the roots of the hair-like bodies to the surface on the opposite side of the surface layer. The average thickness of the surface layer is preferably 15-1000 µm and more preferably 150-800 µm. By setting the thickness to 15 µm or more, the height of the hair-like bodies can be sufficiently expressed. Further, by setting the thickness to 1000 µm or less, the hair-like bodies can be formed efficiently. A continuous phase may be formed without a structural boundary between the surface layer and the hair-like bodies. The absence of a structural boundary means that the surface layer and the hair-like bodies are integrally formed and that there is no structurally clear boundary section therebetween. Moreover, forming a continuous phase refers to a state in which there is no seam between the surface layer and the hair-like bodies and no discontinuities (a continuous phase is formed). This feature differs from a structure in which hair-like bodies are transplanted to a surface layer. The surface layer and the hair-like bodies may have the same composition and the bonds between the surface layer and the hair-like bodies may include covalent bonds. A covalent bond refers to a chemical bond formed by an electron pair being shared by two atoms, and in thermoplastic resins which are chain molecules in which monomers are connected, each polymer is bonded by a covalent bond and is bonded more strongly than by the van der Waals bonds or hydrogen bonds acting between polymer molecules.

Further, the surface layer and the hair-like bodies may be derived not from separate, but from the same solid thermoplastic resin sheet. Derived from the same solid thermoplastic resin sheet means, for example, the hair-like bodies and the surface layer being obtained, directly or indirectly, based on the same resin sheet.

Further, the surface layer and the hair-like bodies may be formed from the same solid thermoplastic resin sheet. Formed from the same solid thermoplastic resin sheet means that the hair-like bodies and the surface layer are directly formed by processing a single resin sheet.

By forming a continuous phase without a structural boundary between the surface layer and the hair-like bodies, the hair-like bodies separating from the surface layer due to an external stimulus is suppressed and a sheet having a good tactile sensation is achieved. Moreover, manufacturing with fewer steps than when transplanting hair-like bodies becomes possible.

The surface layer and the hair-like bodies comprise the same resin composition having a thermoplastic resin as a main component. Here, as a main component means a content of 50 mass% or more, preferably a content of 60 mass% or more, 70 mass% or more, 80 mass%, or 90 mass% or more. A thermoplastic polyurethane resin can be used as the thermoplastic resin in one embodiment of the present invention. In another embodiment, one or more thermoplastic resins from styrene-based resins, olefin-based resins, polyvinylchloride resins, thermoplastic elastomers, and fluorine-based resins may be further contained.

The thermoplastic polyurethane resin is a resin that has an isocyanate and a polyol as reaction raw materials and as the combination thereof, any one combination in which the isocyanate is diphenylmethane diisocynate (MDI)-based, H₁₂ MDI-based, or hexamethylene diisocyanate (HDI)-based and the polyol is polyether-based, polyester-based, or polycarbonate-based may be selected, or a plurality thereof may be combined. In one embodiment of the present invention, a combination of an HDI-based isocyanate and a carbonate-based polyol can be suitably used.

As the styrene-based resin, styrene-based monomers, such as styrene, α-methylstyrene, p-methylstyrene, dimethylstyrene, p-t-butylstyrene, or chlorostyrene, alone or copolymers thereof, copolymers of such a styrene-based monomer and another monomer, for example, a styrene-acrylonitrile copolymer (AS resin), or of the styrene-based monomer and yet another polymer, for example, a graft polymer graft polymerized in the presence of a diene-based rubber-like polymer such as polybutadiene, a styrene-butadiene copolymer, polyisoprene, or polychloroprene, for example, a polystyrene such as high-impact polystyrene (HIPS resin) or a styrene-acrylonitrile graft polymer (ABS resin) can be used. Further, a styrene-based thermoplastic elastomer can also be used.

A polyolefin-based resin means a resin comprising a polymer containing *α*-olefin as a monomer and includes polyethylene-based resins and polypropylene-based resins. A high-density polyethylene, a low-density polyethylene, a linear low-density polyethylene, a linear medium-density polyethylene, etc. can be used as the polyethylene resin and not only these alone, but a copolymer, graft, or blend having these structures can also be used. Examples of the latter resin include products of copolymerizing or blending a resin having a polar group in a polyethylene chain, such as blends with an ethylene-vinyl acetate copolymer, an ethylene-acrylic acid copolymer, an ethylene-acrylic ester copolymer, an ethylene methacrylic ester copolymer, an ethylene-vinyl acetate-vinyl chloride copolymer, or three-component copolymers with a further acid anhydride.

Further, a homopolypropylene, a random polypropylene, a block polypropylene, etc. can be used as the polypropylene resin. When a homopolypropylene is used, the structure of the homopolypropylene may be any of isotactic, atactic, or syndiotactic. When a random polypropylene is used, a substance preferably having 2-20 carbon atoms and more preferably having 4-12 carbon atoms, for example, ethylene, 1-butene, 1-pentene, 1-hexene, 1-heptene, 1-octene, 1-nonene, or 1-decene can be used as the *α*-olefin to be copolymerized with propylene. When a block polypropylene is used, a block copolymer (block polypropylene), a block copolymer containing a rubber component, a graft copolymer, etc. can be used. These olefin resins can be used alone and can also be used in combination with other olefin-based resins.

A vinyl chloride homopolymer or a copolymer of vinyl chloride and another comonomer can be used as the polyvinyl chloride resin. When the polyvinyl chloride is a copolymer, the polyvinyl chloride may be a random copolymer or may be a graft copolymer. One example of a graft copolymer is a copolymer in which, for example, an ethylene-vinyl acetate copolymer or a thermoplastic urethane polymer is used as the backbone polymer and vinyl chloride is graft polymerized thereto. The polyvinyl chloride of the present embodiment is a composition demonstrating an extrusion-moldable soft polyvinyl chloride and containing an additive such as a polymer plasticizer. A known polymer plasticizer can be used as the polymer plasticizer, but, for example, an ethylene copolymer polymer plasticizer such as an ethylene-vinyl acetate-carbon monoxide copolymer, an ethylene-(meth)acrylic acid ester-carbon monoxide copolymer, or an ethylene-vinyl acetate copolymer with a high vinyl acetate content can be raised as a preferred example.

The thermoplastic elastomer includes elastomers having a structure in which a soft polymer substance and a hard polymer substance are combined. Specific examples include styrene-based elastomers, olefin-based elastomers, vinyl chloride-based elastomers, polyester-based elastomers, polyamide-based elastomers, etc. These elastomers can be selected from among those generally commercially available and used.

A vinylidene fluoride homopolymer and a vinylidene fluoride copolymer having vinylidene fluoride as the main component can be used as the fluorine-based resin. Polyvinylidene fluoride (PVDF) resins are crystalline resins exhibiting various crystal structures such as α-type, β-type, γ-type, and αp-type, but examples of the vinylidene fluoride copolymer include vinylidene fluoride-hexafluoropropylene copolymers, vinylidene fluoride-tetrafluoroethylene copolymers, vinylidene fluoride-chlorotrifluoroethylene copolymers, vinylidene fluoride-trifluoroethylene copolymers, vinylidene fluoride-tetrafluoroethylene-hexafluoropropylene three-component copolymers, vinylidene fluoride-chlorotrifluoroethylene-hexafluoropropylene three-component copolymers, and mixtures of two or more thereof.

The thermoplastic resin preferably has a melt mass flow rate of 4 g/10 min. or more at 190°C to 300°C. By setting the rate to 4 g/10 min. or more, the transferability of the shape of the hair-like bodies can be improved. In addition, the melt mass flow rate is a value measured according to JIS K 7210 under the conditions of a load (2.16 Kg to 10.0 Kg) at a test temperature in the temperature range from 190°C to 300°C.

The thermoplastic resin may be alloyed with the abovementioned thermoplastic resins at an arbitrary ratio so long as the effects of the present invention are not inhibited. Furthermore, the thermoplastic resin may contain other additives. As the other additives, so long as the effects of the present invention are not inhibited, an additive such as a water/oil repellent, a colorant such as a pigment or a dye, a mold release agent such as silicone oil or an alkyl ester-based agent, a fibrous reinforcing agent such as glass fibers, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, a flame retardant, an anti-bacterial agent, an anti-viral agent, or a heat stabilizer can be added. Moreover, scrap resin generated in the resin sheet manufacturing process can also be mixed and used.

Examples of the water/oil repellent include silicone-based water repellents, carnauba wax, and fluorine-based water/oil repellents. Examples of the silicone include organopolysiloxane, dimethylpolysiloxane, methylphenylpolysiloxane, methylhydrogenpolysiloxane, etc. and among these, dimethylpolysiloxane is suitably used. Examples of commercially available products include "Clinbell CB50-PP," "Clinbell CB-30PE," "Clinbell CB-1," "Clinbell CB-50AB" (manufactured by Fuji Chemical Industries, Ltd.), etc. in which a silicone is alloyed with a resin. Examples of the carnauba wax include, as commercially available products, "Carnauba No. 1" (manufactured by NIKKO RICA CORPORATION), etc. Examples of the fluorine-based water/oil repellent include surfactants having a perfluoroalkyl group and also include, as a commercially available product, "Surflon KT-PA" (manufactured by AGC SEIMI CHEMICAL CO., LTD.). The amount of the water/oil repellent added is preferably 0.5 mass% to 25 mass%. At less than 0.5 mass%, sufficient water/oil repelling effects may be unobtainable, and at greater than 25 mass%, the moldability may be poor.

Examples of the anti-static agent include polyether ester amide-based high molecular weight type anti-static agents, ionomer-based high molecular weight type anti-static agents, etc. Examples of the polyether ester amide-based high molecular weight type anti-static agent include, as commercially available products, "Pelestat 230," "Pelestat 6500," "Pelectron AS," "Pelectron HS" (manufactured by Sanyo Chemical Industries, Ltd.), etc. Examples of the ionomer-based high molecular weight type anti-static agents include, as commercially available products, "Entire SD100", "Entire MK400" (manufactured by DU PONT-MITSUI POLYCHEMICALS), etc. The amount of the anti-static agent added is preferably 5 mass% to 30 mass%. At less than 5 mass%, sufficient anti-static properties may be unobtainable, and at greater than 30 mass%, the production costs increase.

As the anti-bacterial agent, either an inorganic or organic anti-bacterial agent may be added. Considering dispersibility, inorganic agents are preferable. Specific examples include metal ion (Ag, Zn, Cu) inorganic anti-bacterial agents, calcined shell calcium-based anti-bacterial agents, etc. Examples of commercially available metal ion inorganic anti-bacterial agents include "Bactekiller BM102VT" (manufactured by Fuji Chemical Industries, Ltd.), "Novaron VZF200," "Novaron (AG300)" (manufactured by TOAGOSEI CO., LTD.), "KM-10D-G," "IM-10D-L" (manufactured by Sinanen Zeomic Co., Ltd.), etc. Examples of the calcined shell calcium-based anti-bacterial agent include "Scallow" (manufactured by FID, Ltd.), etc. The amount of the anti-bacterial agent added is preferably 0.5 mass% to 5 mass%. At less than 0.5 mass%, sufficient anti-bacterial properties may be unobtainable, and at greater than 5 mass%, the production costs increase.

As the lubricant/mold release agent, an alkyl-based mold release agent such as an aliphatic hydrocarbon-based compound, a higher fatty acid-based compound, a higher aliphatic alcohol-based compound, or a fatty acid amide-based compound, a silicone-based mold release agent, a fluorine-based mold release agent, etc. can be used. When a mold release agent is used, the amount added is preferably 0.01-5 parts by mass, more preferably 0.05-3 parts by mass, and yet more preferably 0.1-2 parts by mass, of a total of 100 parts by mass with the resin composition. By setting the amount added to 0.01 parts or more, the risk of reduced mold releasing effect is reduced, and by setting the amount added to 5 parts by mass or less, the risk of bleed-out on the sheet surface is reduced.

Moreover, it is also possible to use a masterbatch, etc., in which a lubricant/mold release agent is alloyed in advance with a thermoplastic resin. Examples of commercially available masterbatches with a urethane-based thermoplastic elastomer base include "Waxmaster V" (manufactured by BASF), and considering production efficiency, it is preferable that a masterbatch be used. The amount of masterbatch added is preferably 1-8 parts by mass, more preferably 2-7 parts by mass, and yet more preferably 3-6 parts by mass of a total of 100 parts by mass with the resin composition.

### <Hair-Like Bodies>

Hair-like bodies (1b) refer to a portion extending hair-like from the surface of the surface layer (1a), as shown in FIG. 1. The hair-like bodies are arranged regularly on the surface of the surface layer. Here, arranged regularly means a state in which the hair-like bodies are not arranged randomly, that is, a state arranged in an orderly fashion (e.g., at fixed spacing) in one direction or in two directions. Whether or not the arrangement of the hair-like bodies is regular is determined based on the state of arrangement of the roots of the hair-like bodies. In certain embodiments, the hair-like bodies are positioned on the surface layer at a predetermined spacing and the positions of the bottom surfaces of the hair-like bodies are arranged in an orderly fashion in the longitudinal direction and the transverse direction of the surface layer. Moreover, the form of arrangement of the hair-like bodies is not particularly limited and a vertically and horizontally arranged grid arrangement, a staggered arrangement, etc. can be selected. Due to the hair-like bodies being arranged regularly on the surface of the surface layer, a good tactile sensation is readily expressed, uniformly and without irregularities. Falling of the hair-like bodies occurs due to the application of a load such as, for example, tracing with a finger and finger marks in which the gloss and color tone differ from those of the surrounding portion can be formed. Moreover, due to the hair-like bodies, the tactile sensation can become like that of a suede-like napped sheet.

The hair-like bodies preferably have an average height (h) of 30-500 µm, more preferably 30-250 µm, and yet more preferably 30-200 µm. By setting the average height to 30 µm or more, a good tactile sensation can be sufficiently ensured and by setting the average height to 500 µm or less, a good tactile sensation such as moistness, softness, and fluffiness is obtained.

When the hair-like bodies stand roughly straight with respect to the surface layer, the length from the root to the tip of the hair-like bodies represents the height of the hair-like bodies. Meanwhile, when the hair-like bodies are slanted with respect to the surface layer or when the hair-like bodies have a portion that curls, the distance from the surface of the surface layer at the location of the hair-like bodies most distant from the surface of the surface layer is made the height h of the hair-like bodies. Moreover, the total value of the spacing from the tip to a central portion of the root of the hair-like bodies, subdivided by multi-point measurement, is made the length L of the hair-like bodies.

The average height of the hair-like bodies and the average length of the hair-like bodies can be obtained by using an electron microscope and image processing software to measure the height of the hair-like bodies and the length of the hair-like bodies at a number of arbitrary locations on the resin sheet and using the arithmetic mean values of the measurements.

The hair-like bodies preferably have an average diameter (d) of 1-50 µm and more preferably 5-30 µm. By setting the average diameter of the hair-like bodies to 1 µm or more, a good tactile sensation can be ensured and by setting the average diameter of the hair-like bodies to 50 µm or less, a good tactile sensation such as moistness, softness, and fluffiness is obtained. The average diameter of the hair-like bodies is a value obtained by using an electron microscope and image processing software to measure the diameter at mid-height (h/2) of the hair-like bodies at a number of locations on the resin sheet and using the arithmetic mean value of the measurements.

Moreover, the aspect ratio of the hair-like bodies can be represented as (average height of the hair-like bodies/average diameter of the hair-like bodies). The aspect ratio of the hair-like bodies is preferably 2-20, more preferably 2-10, and yet more preferably 2-5. By setting the aspect ratio to 2 or more, a good tactile sensation can be ensured and by setting the aspect ratio to 20 or less, not only is a good tactile sensation such as moistness, softness, and fluffiness obtained, but the risk of the height to length ratio of the hair-like bodies becoming no higher than a certain level can also be reduced.

Meanwhile, the average bottom surface diameter of the hair-like bodies can also serve as a reference for the aspect ratio. The average bottom surface diameter of the hair-like bodies is preferably 10-150 µm. The average bottom surface diameter of the hair-like bodies is a value obtained by measuring the spacing between neighboring hair-like bodies at a number of locations on the resin sheet and using the arithmetic mean value of the measurements. The aspect ratio, when the bottom surface diameter of the hair-like bodies serves as a reference therefor, is preferably 1.0-10, more preferably 1.0-5, and yet more preferably 1.0-2.5. By setting the aspect ratio to 1.0 or more, a good tactile sensation can be ensured and by setting the aspect ratio to 10 or less, not only is a good tactile sensation such as moistness, softness, and fluffiness obtained, but the risk of the height to length ratio of the hair-like bodies becoming no higher than a certain level can also be reduced.

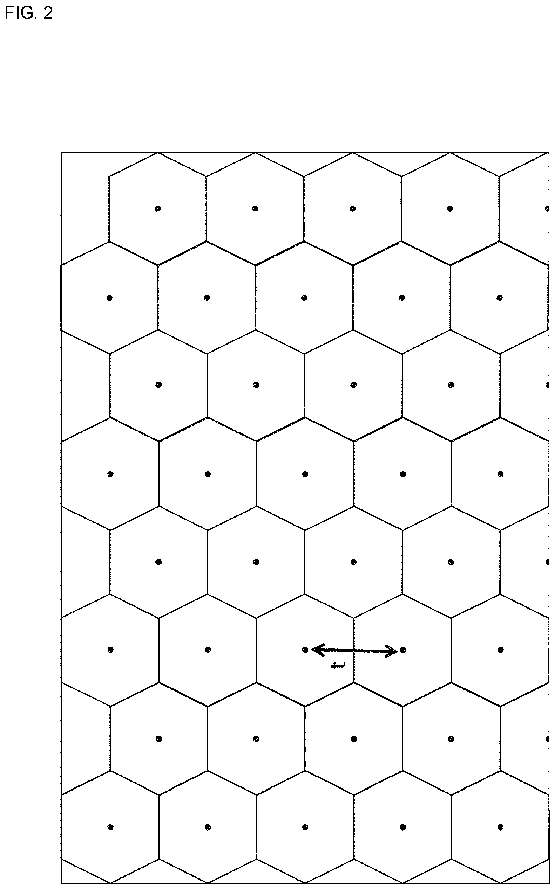

The average spacing (t) between the hair-like bodies is preferably 20-200 µm and more preferably 40-150 µm. For example, as shown in FIG. 2, the spacing between the hair-like bodies means the distance from the center of the root of a hair-like body to the center of the root of a neighboring hair-like body. By setting the average spacing to 20 µm or more, a good tactile sensation is ensured and by setting the average spacing to 200 µm or less, a good tactile sensation such as moistness, softness, and fluffiness is obtained. The average spacing of the hair-like bodies is a value obtained by measuring the spacing between neighboring hair-like bodies at a number of locations on the resin sheet and using the arithmetic mean value of the measurements.

The shape of the hair-like bodies is not particularly limited and may be configured to extend hair-like in a direction away from the surface layer in a shape in which the hair-like bodies gradually thin approaching the tip or in which a swelling is formed at the tip. In short, the hair-like bodies may have a shape in which the cross-sectional area gradually shrinks with increasing distance from the surface layer and then once again increases when the shape terminates. Moreover, the shape of the tip part of the hair-like bodies may be bud-shaped or mushroom-shaped. Moreover, the hair-like bodies may have a portion positioned at the base end extending in a direction away from the surface layer, a portion that extends from the portion positioned at the base end and is curved with a fixed curvature or a curvature that gradually changes, and furthermore, a portion that is wound in a helix shape or a spiral shape. In this case, the tip parts of the hair-like bodies may have a shape that is folded inward. By having such a shape, a good tactile sensation is expressed. Moreover, due to the bud-shaped or mushroom-shaped portion being hollow, a better tactile sensation is expressed. When forming a bud shape or mushroom shape at the hair-like tips, it is preferable that the ratio of the average diameter of the width of the bud shape or mushroom shape with respect to the average diameter of the hair-like bodies be 1.1 or more. The height of the bud shape or mushroom shape is preferably 7 µm or more. The average diameter of the hair-like bodies and the average diameter of the width and the height of the bud shape or mushroom shape are values obtained by using the arithmetic mean value of measurements made with a scanning electron microscope photograph. The hair-like bodies comprise a thermoplastic resin. The same resins that can be used in the surface layer can be used as the thermoplastic resin.

The thermoplastic resin contained in the surface layer and the hair-like bodies may form at least partially a three-dimensional cross-linked structure (e.g., a three-dimensional net-like structure). For example, it may be such that in certain embodiments, at least some of the hair-like bodies are cross-linked bodies, and in other embodiments, the overall surface of the hair-like bodies is a cross-linked body, and in yet other embodiments, the entirety (from the boundary with the surface layer to the tip part) of the hair-like bodies is a cross-linked body. Examples of methods for forming a cross-linked body include a method involving forming a resin sheet and then irradiating a surface thereof having hair-like bodies with an electron beam and a method involving adding an organic peroxide and heating and humidifying after or during molding of the resin sheet. Examples of resins in which an organic peroxide is added include commercially available products such as "LINKLON" manufactured by Mitsubishi Chemical Corporation. In the present embodiment, it is preferable that cross-linked bodies be formed by electron beam irradiation (electron beam cross-linked bodies).

### <Second Layer>

As the second layer in the resin sheet according to the first embodiment, it is preferable that a thermoplastic resin with excellent adhesiveness with the surface layer be used, and a resin with a polymer alloy resin of a polycarbonate-based resin and a polyester-based resin as a main component can be used. The mass ratio between the polycarbonate-based resin and the polyester-based resin is preferably 50:50 to 90:10, more preferably 60:40 to 80:20, and yet more preferably 65:35 to 75:25.

Here, the polymer alloy resin refers to a polymer multicomponent system. The polymer alloy resin may be a polymer blend of fixed miscibility by blending or the like, may be a block copolymer or a graft copolymer by copolymerization, or may be a mixture of resins with no miscibility.

Examples of the polycarbonate-based resin include substances derived from aliphatic dihydroxy compounds and substances derived from aromatic dihydroxy compounds. For example, substance derived from aromatic dihydroxy compounds can be suitably used, and substances derived from aromatic dihydroxy compounds (bisphenols) in which two aromatic dihydroxy compounds are bonded via a certain type of bonding group are particularly preferable. Substances manufactured by known manufacturing methods by polycondensation of a dihydroxy compound and phosgene or carbonic acid ester can be used as these resins. The manufacturing method is not limited, and commercially available resins can also be used.

As the polyester-based resin, polyethylene terephthalate, polybutylene terephthalate, polyethylene-2,6-naphthalate, polymethylene terephthalate, a polyester resin in which, as copolymerization components, for example, a diol component such as diethylene glycol, neopentyl glycol, or polyalkylene glycol, and a dicarboxylic acid component such as adipic acid, sebacic acid, phthalic acid, isophthalic acid, or 2,6-naphthalene dicarboxylic acid are copolymerized, etc. can be used.

The second layer may contain other additives as necessary. As the other additives, so long as the effects of the present invention are not inhibited, an additive such as a water repellent, an oil repellent, a colorant such as a pigment or a dye, a lubricant/mold release agent such as silicone oil or an alkyl ester-based agent, a fibrous reinforcing agent such as glass fibers, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, a flame retardant, an anti-bacterial agent, an anti-viral agent, or a heat stabilizer can be added. Moreover, scrap resin generated in the resin sheet manufacturing process can also be mixed and used. Further, in the present embodiment, so long as the effects of the present invention are not inhibited, the substrate layer may have a partially cross-linked structure.

Moreover, in the present embodiment, so long as the effects of the present invention are not inhibited, the second layer may have a partially cross-linked structure.

The second layer preferably has an average thickness of 50-1500 µm, more preferably 100-1000 µm, and yet more preferably 150-500 µm. By setting the average thickness to 50 µm or more, the film-forming process is facilitated and by setting the average thickness to 1500 µm or less, production costs can be suppressed.

### <Resin Sheet>

In the present embodiment, "tactile sensation" means the feeling and texture of a surface of the resin sheet. A judgment is made regarding whether a resin sheet surface feels comfortable when touched and when the surface is judged as feeling comfortable, a good specific texture with feelings such as moistness, softness, or fluffiness is made the good tactile sensation.

The resin sheet in one embodiment of the present invention preferably has a color difference ΔE* of 10 or less, more preferably 5 or less, and yet more preferably 3 or less before and after testing upon 500 hours of irradiation at a black panel temperature of 63°C and an irradiance of 60 W/m² using a xenon lamp-type accelerated light resistance tester. If the resin sheet has a color difference ΔE* of 10 or less, there will be little discoloration even when used in places on which ultraviolet light or the like is shone, making the resin sheet suitable for such uses as vehicle interior materials.

Further, the resin sheet in one embodiment of the present invention has chemical resistance. Chemical resistance means resistance to specific chemicals. In the present embodiment, this means resistance to sunscreen cream. This means, for example, the occurrence of appearance abnormalities such as cracks and interlayer separation is suppressed even when sunscreen cream is applied and heated for four hours in an 80°C oven. If a resin sheet has resistance to sunscreen cream, it is suitable for molding and use on surfaces such as those of vehicle interior materials and daily commodities to which sunscreen cream can adhere.

In one embodiment of the present invention, the thickness of the resin sheet refers to the sheet thickness combining the average height of the hair-like bodies, the average thickness of the surface layer, and the average thickness of the second layer. The sheet thickness is preferably 65-1600 µm, more preferably 115-1050 µm, and yet more preferably 165-550 µm. By setting the thickness to 65 µm or more, a good tactile sensation can be sufficiently ensured and by setting the thickness to 1600 µm or less, manufacturing costs can be suppressed.

### [Second Embodiment]

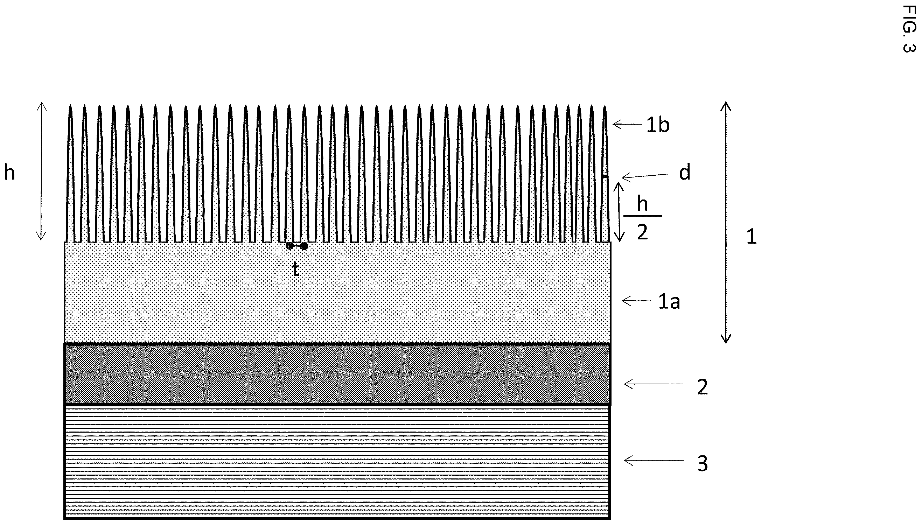

An example of the resin sheet according to a second embodiment of the present invention is a resin sheet in which a substrate layer (3) is formed on the surface of the second layer (2), which is opposite that on which the surface layer (1) is laminated, as shown in FIG. 3. That is, the layer configuration of the resin sheet according to the second embodiment is, from top to bottom, the hair-like bodies and the surface layer (1), the second layer (2), and the substrate layer (3).

Here, the hair-like bodies are the same as those described in the first embodiment, so description thereof is omitted. However, the thickness of the hair-like bodies and the surface layer represented by the total of the average height of the hair-like bodies and the average thickness of the surface layer is preferably 150-1500 µm, more preferably 150-1050 µm, and yet more preferably 150-500 µm. By setting the thickness to 150 µm or more, a good tactile sensation can be ensured and by setting the thickness to 1500 µm or less, production costs can be suppressed.

Further, the material for the second layer is the same as that described in the first embodiment, so description thereof is omitted, but the second layer preferably has a thickness of 5-50 µm, more preferably 7-30 µm, and yet more preferably 8-20 µm.

### <Substrate Layer>

As the substrate layer in the resin sheet according to the second embodiment, it is preferable that a thermoplastic resin with excellent adhesiveness with the second layer be used, and a resin with an acrylonitrile/ethylene-propylene-diene/styrene (AES) resin as a main component can be used.

Further, a substance alloyed, at an arbitrary proportion, with a thermoplastic resin such as a styrene-based resin, an olefin-based resin, a polyester-based resin, a nylon-based resin, an acrylic resin, or a thermoplastic elastomer can be used. In particular, a substance alloyed with a polycarbonate-based resin can be suitably used. The mass ratio thereof is preferably 99:1 to 20:80, more preferably 80:20 to 30:70, and yet more preferably 60:40 to 40:60. Moreover, when laminating, lamination may be performed by coextrusion molding or by extrusion laminate molding or dry laminate molding using a non-stretched film or a biaxially stretched film.

As the nylon-based resin, a lactam polymer such as caprolactam or laurolactam; a polymer of an aminocarboxylic acid such as 6-aminocaproic acid, 11-aminoundecanoic acid, or 12-aminododecanoic acid; a polycondensate of a diamine unit such as an aliphatic diamine such as hexamethylenediamine, decamethylenediamine, dodecamethylenediamine, or 2,2,4- or 2,4,4-trimethylhexamethylenediamine, an alicyclic diamine such as 1,3- or 1,4-bis(aminomethyl)cyclohexane or bis(p-aminocyclohexylmethane), or an aromatic diamine such as m- or p-xylylenediamine, and a dicarboxylic acid unit such as an aliphatic dicarboxylic acid such as adipic acid, suberic acid, or sebacic acid, an alicyclic dicarboxylic acid such as cyclohexanedicarboxylic acid, or an aromatic dicarboxylic acid such as terephthalic acid or isophthalic acid; and copolymers, etc. thereof can be used. Examples thereof include nylon 6, nylon 9, nylon 11, nylon 12, nylon 66, nylon 610, nylon 611, nylon 612, nylon 6T, nylon 6I, nylon MXD6, nylon 6/66, nylon 6/610, nylon 6/6T, nylon 6I/6T, etc. and among these, nylon 6 and nylon MXD6 are suitable.

If the polymer is a vinyl polymer based on methacrylic acid ester monomers, it can be used as an acrylic resin and the structure, etc. thereof is not particularly limited. Examples of the methacrylic acid ester monomers include methyl methacrylate, ethyl methacrylate, propyl methacrylate, butyl methacrylate, pentyl methacrylate, hexyl methacrylate, etc. Moreover, the alkyl group such as a propyl group, butyl group, pentyl group, or hexyl group in the methacrylic acid ester monomer may be linear or may be branched. The methacrylic acid ester resin may be a homopolymer of a methacrylic acid ester monomer or a copolymer of multiple methacrylic acid ester monomers and may have monomer units derived from known vinyl compounds other than methacrylic acid ester, such as ethylene, propylene, butadiene, styrene, *α*-methylstyrene, acrylonitrile, and acrylic acid.

The substrate layer may contain other additives as necessary. As the other additives, so long as the effects of the present invention are not inhibited, an additive such as a water repellent, an oil repellent, a colorant such as a pigment or a dye, a lubricant/mold release agent such as silicone oil or an alkyl ester-based agent, a fibrous reinforcing agent such as glass fibers, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, an ultraviolet light absorber, a flame retardant, an anti-bacterial agent, an anti-viral agent, or a heat stabilizer can be added. Moreover, scrap resin generated in the resin sheet manufacturing process can also be mixed and used. Further, in the present embodiment, so long as the effects of the present invention are not inhibited, the substrate layer may have a partially cross-linked structure.

Further, in the present embodiment, so long as the effects of the present invention are not inhibited, the substrate layer may have a partially cross-linked structure.

In the present embodiment, the substrate layer preferably has an average thickness of 50-1500 µm, more preferably 100-1000 µm, and yet more preferably 150-500 µm. By setting the average thickness to 50 µm or more, the film-forming process is facilitated and by setting the average thickness to 1500 µm or less, production costs can be suppressed.

### [Resin Sheet Manufacture]

The method for manufacturing a resin sheet according to the present application is not limited and may be any method, but typically includes steps of melt-extruding a raw resin and adding regularly arranged hair-like bodies to at least one surface of the obtained extruded resin sheet.

In the manufacture of a multilayer sheet, any resin sheet molding method can be used. For example, a feed block or a multi-manifold die can be used. Moreover, the layer configurations of the embodiments of the resin sheet of the present application are basically as discussed previously, but beyond these, for example, scrap raw material generated in a manufacturing process for the resin sheet or molded container of the present invention may be added to the substrate layer or laminated as a further layer so long as degradation of physical properties, etc. is not observed.

The method for adding the hair-like bodies is not particularly limited and any method known by a person skilled in the art can be used. Examples include a manufacturing method using an extrusion molding technique, a manufacturing method using a roll-to-roll technique, a manufacturing method using a photolithography technique, a manufacturing method using a hot pressing technique, a manufacturing method using a pattern roll and a UV curable resin, a manufacturing method using a 3D printer, a method for covalently bonding with a polymerization reaction after embedding the hair-like bodies in the resin layer, etc.

For example, when using an extrusion molding technique, the resin sheet according to the present invention can be manufactured by extruding a resin sheet with a T-die technique and casting with a transfer roll on which a relief process has been performed and a touch roll so as to add the shapes of hair-like bodies to a surface of the resin sheet.

As the transfer roll on which a relief process has been performed, a roll in which a micro-relief, with a size from several micrometers to several hundreds of micrometers, has been applied regularly on a surface thereof with a laser engraving or electrocasting method, an etching method, a mill engraving method, etc. can be used. Here, regular means that the relief is in an arranged state that is not random, that is, is arranged in an orderly fashion in one direction or in two directions. The arrangement of the relief in certain embodiments can be selected from a vertically and horizontally arranged grid arrangement, a staggered arrangement, etc. Examples of the shape of the relief part include, if the shape of a concavity, funnel-shapes (cone, quadrangular pyramid, triangular pyramid, hexagonal pyramid, etc.), semicircles, rectangles (quadrangular prism), etc. As the size thereof, the diameter of the opening of the concavity, the depth of the concavity, the spacing of the concavity shapes, etc. are from several micrometers to several hundreds of micrometers. For example, a metal, a ceramic, etc. can be used as the material of the transfer roll. The spacing between the hair-like bodies can be adjusted by adjusting the spacing between the concavities on the transfer roll and the height of the hair-like bodies can be adjusted by adjusting the depth of the concavities on the transfer roll, and the tactile sensation can also be adjusted thereby.

Moreover, it is preferable that a relief process with a high aspect ratio be performed on the transfer roll surface. For example, the aspect ratio (concavity depth/concavity opening diameter) when processing concavity shapes into the transfer roll surface is preferably 1.0-9.0. In performing a high aspect ratio relief process on the transfer roll surface, in comparison with an etching method, a blasting method, a mill engraving method, etc., a laser engraving method or an electrocasting method is suitable when performing precision processing in the depth direction and thus is particularly suitably used.

For example, a metal, a ceramic, etc. can be used as the material of the transfer roll. Meanwhile, various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a Teflon^{®} layer may be formed on the surface of the touch roll.

Various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a Teflon^{®} layer may be formed on the surface of the touch roll.

The resin sheet of the present embodiment can be manufactured by using a roll set of the above transfer roll and touch roll.

In certain embodiments, a resin sheet of the present embodiment can be manufactured by adjusting the temperature of the transfer roll to near the crystal fusion temperature, the glass transition point, or the melting point of the thermoplastic resin (for example, 100-150°C when using a random polypropylene) and casting with a pinch pressure between the transfer roll and the touch roll of 30-120 Kg/cm². The cast resin sheet is taken in at a line speed of 0.5-30 m/min. using a pinch roll, etc.

Further, while the above embodiments are shown specifically, the present invention is not limited thereto.

### [Molded Article]

The molded product of the present invention is a molded product using the resin sheet of the present invention. The resin sheet of the present invention is compatible with molding in general and examples of molding methods include, other than insert molding and in-mold molding, general vacuum molding and pressure molding, and as applications thereof, a method of heating and softening a resin sheet in vacuum and overlaying on (molding to) a surface of an existing molded product by opening under atmospheric pressure, etc., but the molding method is not limited thereto. Further, known sheet heating methods such as radiation heating with an infrared heater or the like, which is non-contact heating, can be adapted as a method to heat and soften a sheet before molding. In vacuum-pressure molding in certain embodiments, for example, a resin sheet is heated for 20-480 seconds at a surface temperature of 60-220°C and then molded onto an existing molded product surface and can be stretched to 1.05-2.50 times depending on the surface shape.

### [Product]

The resin sheet to which the hair-like bodies according to the present invention have been added to a surface thereof can be applied to a use requiring the good tactile sensation indicated above. For example, the resin sheet of the present invention can be applied to automobile interior materials, electronic devices, electronic device cladding, cosmetic containers or container members, stationery members, lighting fixture members, and daily commodities members.

Examples of automobile interior materials include the portions of the automobile interior that hands touch such as the steering wheel, dashboard, levers, and switches. Examples include interior materials in which the abovementioned resin sheet is molded and attached to a surface of a known instrument panel or pillar (for example, JP 2009-184421 A). By attaching the resin sheet, an interior material imparted with a good tactile sensation can be achieved. As the material of the resin sheet to be attached, in consideration of light resistance and chemical resistance, olefin-based resins, vinyl chloride-based resins, and urethane-based elastomers are preferable. The method for attaching the resin sheet and the interior material together is not particularly limited.

Examples of electronic device cladding include transmitter housings for keyless entry systems, smartphone housings, smartphone cases, music player cases, game console housings, digital camera housings, electronic notebook housings, calculator housings, tablet housings, mobile computer housings, keyboards, mice, etc. Examples include portable transmitters in which the resin sheet of the present invention is molded and attached to a surface of a portable transmitter housing of a known keyless entry system (for example, JP 2005-228911 A). By attaching the resin sheet, a portable transmitter imparted with a good tactile sensation can be achieved. As the material of the resin sheet to be attached, an olefin-based resin or a urethane-based elastomer is preferable. The method for attaching the resin sheet and the housing together is not particularly limited.

Examples of cosmetic container members include containers for face cream, pack cream, foundation, and eyeshadow, such as cosmetic containers in which the resin sheet of the present application is molded and attached to a surface of a lid member of a known container for foundation (JP 2017-29608 A). By attaching the resin sheet, a cosmetic container imparted with a good tactile sensation can be achieved. As the material of the resin sheet to be attached, an olefin-based resin or a urethane-based elastomer is preferable. The method for attaching the resin sheet is not particularly limited.

Examples of stationery members include book covers, notebook covers, pen case covers, etc. and, for example, a book cover imparted with a good tactile sensation and waterproofing can be achieved by manufacturing a known book cover (for example, JP 2007-246122 A) using the sheet of the present invention. Moreover, the form of the book cover is not particularly limited. As the material of the sheet, an olefin-based resin or a urethane-based elastomer is preferable. The method for manufacturing using the resin sheet is not particularly limited.

Examples of lighting equipment members include lighting equipment for indoors or in vehicles, such as a lighting device in which the resin sheet of the present invention is molded and attached to a surface of a cover member of a known LED lighting device. By attaching the resin sheet, an LED lighting device imparted with a good tactile sensation and light diffusibility can be achieved. As the material of the resin sheet to be attached, an olefin-based resin or a fluorine-based resin is preferable. The method for attaching the resin sheet is not particularly limited.

Examples of daily commodities members include restroom products, indoor mats, sheets for tables, etc., such as a toilet device in which the resin sheet of the present invention is molded and attached to a surface of a seat member of the toilet device. By attaching the resin sheet, a toilet device with a seat imparted with a good tactile sensation can be achieved. As the material of the resin sheet to be attached, an olefin-based resin, a vinyl chloride resin, or a fluorine-based resin is preferable. The method for attaching the resin sheet is not particularly limited.

Furthermore, hair-like body sheets in which words or patterns are printed on the surface of the hair-like bodies with a general printing method (an offset printing method, a gravure printing method, a flexographic printing method, a screen printing method, foil stamping, etc.) can be manufactured and applied to the above use. The material of the resin sheet to be printed on is not particularly limited, but it is preferable that the printability with the ink used in printing be considered.

Moreover, a laminated body in which the resin sheet of the present invention is laminate molded (dry laminate molded or extrusion laminate molded) with a printed article on which words, patterns, etc. are printed (such as paper or a metal thin film) or with a non-woven cloth, etc. can be manufactured. For example, a business card with a tactile sensation can be manufactured by laminate molding to the printing surface of the business card. The material of the resin sheet to be laminated is not particularly limited.

### EXAMPLES

The present invention is explained in more detail below using examples and comparative examples, but the present invention is not at all limited by the details of the examples, etc.

The raw materials used in the examples, etc. are as follows.
(1) Hair-like bodies and surface layer
   - (A-1) TPU (urethane-based elastomer) "XN2001: HDI/Polycarbonate-Based" (manufactured by TOSOH CORPORATION)
   - (A-2) TPU (urethane-based elastomer) "A3085A10: HDI/Polycarbonate-Based" (manufactured by BASF)
   - (A-3) TPU (urethane-based elastomer) "ET880: MDI/Polyether-Based" (manufactured by BASF)
   - (B) Mold release agent masterbatch "Waxmaster V" (manufactured by BASF)
(2) Second layer
   - (C-1) PC/polyester "SP3002" (manufactured by Sumika Polycarbonate Ltd.)
   - (C-2) AES "UNIBRITE UB-311" (manufactured by NIPPON A & L INC.)
   - (C-3) PC/AES "TECHNIACE W-101" (manufactured by NIPPON A& L INC.)
   - (C-4) ABS "DENKAABS GT-R-61A" (manufactured by Denka Company Limited)
(3) Substrate layer
   - (D-1) AES "UNIBRITE UB-311" (manufactured by NIPPON A & L INC.)

The evaluation methods for the various characteristics of the resin sheets and the molded articles, in which the resin sheets were vacuum-pressure molded, manufactured in the examples and comparative examples are as follows.

### (1) Average height of hair-like bodies, average length of hair-like bodies, average diameter of hair-like bodies, average spacing between hair-like bodies, and average thickness of surface layer

The height (h) of the hair-like bodies, the diameter (d) of the hair-like bodies, the spacing (t) between the hair-like bodies, and the thickness of the surface layer of the resin sheet were measured using a laser microscope (VK-X100. manufactured by KEYENCE CORPORATION). The measured samples were cross-sectional slices cut from the resin sheets at three arbitrary locations using a microtome. The height of 10 hair-like bodies was measured for each sample and an arithmetic mean value of the 30 measurements was used as the average height of the hair-like bodies. For the average diameter of the hair-like bodies, the diameter of 10 hair-like bodies of each sample was measured at mid-height (h/2) and an arithmetic mean value of the 30 measurements was used. For the average spacing between the hair-like bodies, the distance from the center of the root of one hair-like body to the center of the root of a neighboring hair-like body was measured at 10 locations of each sample and an arithmetic mean value of the 30 measurements was used. For the average thickness of the surface layer, the thickness from the roots of the hair-like bodies to the other layer interface was measured at 10 locations of each sample and an arithmetic mean value of the 30 measurements was used.

### (2) Good tactile sensation sensory evaluation

A sensory evaluation of the good tactile sensation was performed by having a total of 10 people, 5 men and 5 women, touch the resin sheets. Evaluation was made using specific tactile sensations (smoothness, moistness, etc.) when touching the resin sheet surface and the tactile sensation felt by the greatest number of people was made the tactile sensation of the resin sheet surface.

### (3) Light resistance test

For the raw thermoplastic resin of the hair-like bodies and the surface layer, a sheet of about 0.3-mm thickness was produced using a heat press machine and irradiated for 500 hours at a black panel temperature of 63 ± 3°C and an irradiation intensity of 60 W/m² using a xenon lamp-type accelerated light resistance tester (Xenon Weather Meter, manufactured by Suga Test Instruments Co., Ltd.). A color difference (transmission method) ΔE* of the sheet before and after the test was measured using a color-difference meter, Color meter ZE6000 (manufactured by NIPPON DENSHOKU INDUSTRIES Co., Ltd.).

### (4) Chemical resistance test

Commercially available sunscreen cream was applied uniformly at 0.5 g to a 50 mm long × 50 mm wide portion of the resin sheet. This was left in an 80°C oven for four hours. The resin sheet was taken out, the surface was rinsed with water, and the state of the portion to which the sunscreen cream was applied was visually inspected to evaluate resistance to the sunscreen cream with the criteria below. The sunscreen cream used was "UltraSheer Dry-touch Sunscreen SPF45" manufactured by Neutrogena (containing, as ingredients, avobenzone 3%, homosalate 10%, octisalate 5%, octocrylene 2.8%, oxybenzene 6%).
∘: Slight cracking, wrinkling, swelling, peeling, etc. was observed in a part of the tested portion, but the appearance had no practical problems.
△: Slight cracking, wrinkling, swelling, peeling, etc. was observed throughout the tested portion, the appearance was poor, and there were practical problems.
×: Cracking, wrinkling, swelling, peeling, etc. was observed in a part of the tested portion, and the appearance had practical problems.

### (5) Formativeness evaluation

The resin sheet was heated in vacuum with a double-sided vacuum molding machine (NGF-0709-S, manufactured by Fu-Se Vacuum Forming) and then a molded article was manufactured by vacuum pressure molding the resin sheet to a surface of a smartphone cover prepared in an environment of atmospheric pressure. The sheet was heated at a sheet surface temperature range of 80-220°C for 40-300 seconds and stretched to 1.5 times at the most stretched location.

Formativeness evaluation was performed by appearance on the sheet's trackability on a side of the smartphone cover. As the evaluation criteria, o was given when the sheet was able to track and × was given when the sheet was unable to track (when there was a gap between the smartphone cover and the sheet).

The height of 10 hair-like bodies was measured before molding and after molding, an arithmetic mean value of the 30 measurements was used to measure and calculate (average height of hair-like bodies before molding) / (average height of hair-like bodies after molding). This was used as the average height retention rate of the hair-like bodies.

### [Examples 1 to 5 and Comparative Examples 1 to 3]

TPU (A) and a mold release masterbatch (B) for forming the hair-like bodies and the surface layer were streamed from a 40 mm single-screw extruder and a thermoplastic resin (C) for forming the second layer was streamed from a 65-mm single-screw extruder to extrude a resin sheet with a T-die method. The extruded resin sheet was cast using a relief processed transfer roll on which a relief process had been performed with chromium oxide spraying and a laser engraving method and which was adjusted to 60-150°C and a silicone-based rubber touch roll having a rubber hardness of 70 and adjusted to 10-90°C and taken in at a line speed of 1-15 m/min. using a pinch roll. Resin sheets with the compositions, the thicknesses, and the surface shapes shown in Table 1 were thus produced.

### [Example 6]

A three-layer resin sheet was obtained by a laminate molding method and to add a hair-like body shape to a surface of this resin sheet, this sheet was cast with a transfer roll on which a relief process had been performed with an electrocasting method and a touch roll and taken in at a line speed of 1-15 m/min. using a pinch roll. Resin sheets with the compositions, the thicknesses, and the surface shapes shown in Table 1 were thus produced.

Evaluative testing of various characteristics was performed using the resin sheets obtained in the examples and comparative examples and the results are shown in Table 1.

**Table 1**

| | | Hair-like bodies and surface layer | | | | Second layer | | | | Substrate layer | Nap shape | | | Good tactile sensation | Chemical resistance | Light resistance | Formativeness evaluation | |
|---|---|---|---|---|---|---|---|---|---|---|---|---|---|---|---|---|---|---|
| | | TPU (A-1) | TPU (A-2) | TPU (A-3) | Mold release agent masterbatch (B) | PCI Polyester (C-1) | AES (C-2) | PCI AES (C-3) | ABS (C-4) | AES (C-2) | Average height h (µm) | Average diameter d (µm) | Average spacing t (µm) | Tactile sensation | Sunscreen cream | Color difference 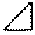 | Formativeness | Hair-like bodies average height retention rate (%) |
| Ex.1 | Composition (mass%) | 95 | - | - | 5 | 100 | - | - | - | - | 150 | 30 | 60 | smooth, moist | ○ | 5 | ○ | 93 |
| | Thickness (µm) | 200 (base layer 50 + hair-like bodies 150) | | | | 310 | | | | - | | | | | | | | |
| Ex.2 | Composition (mass%) | 95 | - | - | 5 | 100 | - | - | - | - | 100 | 30 | 60 | smooth, moist | ○ | 5 | ○ | 96 |
| | Thickness (µm) | 100 (base layer 50 + hair-like bodies 501 | | | | 320 | | | | - | | | | | | | | |
| Ex.3 | Composition (mass%) | 95 | - | - | 5 | 100 | - | - | - | | 150 | 30 | 60 | smooth, moist | ○ | 5 | ○ | 94 |
| | Thickness (µm) | 300 (base layer 50 + hair-like bodies 250) | | | | 300 | | | | - | | | | | | | | |
| Ex.4 | Composition (mass%) | - | 95 | - | 5 | 100 | - | - | - | | 100 | 30 | 60 | smooth, moist | ○ | 5 | ○ | 96 |
| | Thickness (µm) | 200 (base layer 50 + hair-like bodies 150) | | | | 320 | | | | - | | | | | | | | |
| Ex.5 | Composition (mass%) | | - | 95 | 5 | 100 | - | - | - | - | 150 | 30 | 60 | smooth, moist | ○ | 5 | ○ | 94 |
| | Thickness (µm) | 200 (base layer 50 + hair-like bodies 150) | | | | 300 | | | | - | | | | | | | | |
| Ex.6 | Composition (mass %) | 95 | - | - | 5 | 100 | - | - | - | 100 | 200 | 30 | 60 | smooth, moist | ○ | 5 | ○ | 96 |
| | Thickness (µm) | 200 (base layer 50 + hair-like bodies 150) | | | | 10 | | | | 300 | | | | | | | | |
| Comp. Ex. 1 | Composition (mass %) | 95 | - | - | 5 | - | 100 | - | - | - | 170 | 30 | 60 | smooth, moist | × | 5 | ○ | 88 |
| | Thickness (µm) | 220 (base layer 50 + hair-like bodies 170) | | | | 300 | | | | - | | | | | | | | |
| Comp. Ex. 2 | Composition (mass%) | | - 95 | - | 5 | - | - | 100 | - | - | 100 | 30 | 60 | smooth, moist | △ | 5 | ○ | 92 |
| | Thickness (µm) | 150 (base layer 50 + hair-like bodies 100) | | | | 350 | | | | - | | | | | | | | |
| Comp. Ex. 3 | Composition (mass %) | | - | 95 | 5 | - | - | - | 100 | - | 200 | 30 | 60 | smooth, moist | × | 10 | o | 95 |
| | Thickness (µm) | 250 (base layer 50 + hair-like bodies 200) | | | | 310 | | | | - | | | | | | | | |

The following is clear from the results shown in Table 1.

All the resin sheets of Examples 1-6 produced results satisfying the evaluation criteria pertaining to good tactile sensation, light resistance, chemical resistance, and formativeness. Meanwhile, for the resin sheets of Comparative Examples 1-3, the thermoplastic polyurethane resin of the surface layer swelled and was in a state of easy peeling from the second layer.

Moreover, the shapes of the resin sheets obtained in Examples 1-4 were observed using a field emission-type scanning electron microscope (FE-SEM, JEOL, Ltd., JSM-7001F).

It was observed from the scanning electron microscope images that the hair-like bodies extend in a fixed direction without tangling with one another. Moreover, the shapes of the hair-like bodies included those in which the cross-sectional area gradually shrinks with increasing distance from the surface layer and those in which the cross-sectional area gradually shrinks and then once again increases when the shape terminates. Moreover, it was observed that the tip parts of the hair-like bodies in which the cross-sectional area gradually shrinks with increasing distance from the surface layer and then once again increases when the shape terminates are bud-shaped or mushroom-shaped, and the bud-shaped or mushroom-shaped parts are partially hollow. It was inferred that a better tactile sensation is expressed by having such a shape.

The present invention was described above using various embodiments, but it need not be mentioned that the technical scope of the present invention is not limited to the scope described in the above embodiments. It is clear to a person skilled in the art that it is possible to add various modifications or improvements to the above embodiments. Further, it is clear from the recitations of the patent claims that aspects in which such modifications or improvements are added are included in the technical scope of the present invention.

### REFERENCE SIGNS LIST

- 1: Hair-like bodies and surface layer
- 1a: Surface layer
- 1b: Hair-like bodies
- d: Diameter of hair-like bodies
- h: Height of hair-like bodies
- t: Spacing between hair-like bodies
- 2: Second layer
- 3: Substrate layer

## Claims

1. A resin sheet having: a surface layer having hair-like bodies arranged regularly on one surface thereof; and a second layer directly laminated to a surface opposite that of the hair-like bodies of the surface layer, the surface layer comprising a thermoplastic polyurethane resin and the second layer comprising a polymer alloy resin of a polycarbonate-based resin and a polyester-based resin.

2. The resin sheet according to claim 1, wherein the thermoplastic polyurethane resin comprises a hexamethylene diisocyanate (HDI) and a carbonate-based polyol as raw materials.

3. The resin sheet according to claim 1 or 2, wherein the resin sheet further has a substrate layer on a surface of the second layer opposite the surface to which the surface layer is laminated.

4. The resin sheet according to any one of claims 1 to 3, wherein the hair-like bodies have an average height of 30 µm or more and 500 µm or less, an average diameter of 1 µm or more and 50 µm or less, and an average spacing, between the hair-like bodies, of 20 µm or more and 200 µm or less.

5. A molded article of the resin sheet according to any one of claims 1 to 4.

6. The molded article according to claim 5, wherein the molded article is molded on a surface of an automobile interior material, an electronic device, an electronic device cladding, a cosmetic container, or a container member.

7. A method for manufacturing the molded article according to claim 5 or 6, the method comprising vacuum molding, insert molding, or in-mold molding the resin sheet according to any one of claims 1 to 4.

## Patentansprüche

1. Harzfolie mit: einer Oberflächenschicht mit haarähnlichen Körpern, die regelmäßig auf einer Oberfläche davon angeordnet sind; und einer zweiten Schicht, die direkt auf eine Oberfläche laminiert ist, die derjenigen der haarähnlichen Körper der Oberflächenschicht gegenüberliegt, wobei die Oberflächenschicht ein thermoplastisches Polyurethanharz umfasst und die zweite Schicht ein Polymerlegierungsharz aus einem Harz auf Polycarbonatbasis und einem Harz auf Polyesterbasis umfasst.

2. Harzfolie nach Anspruch 1, wobei das thermoplastische Polyurethanharz ein Hexamethylendiisocyanat (HDI) und ein Polyol auf Carbonatbasis als Rohstoffe umfasst.

3. Harzfolie nach Anspruch 1 oder 2, wobei die Harzfolie ferner eine Substratschicht auf einer Oberfläche der zweiten Schicht aufweist, die der Oberfläche, auf die die Oberflächenschicht laminiert ist, gegenüberliegt.

4. Harzfolie nach einem der Ansprüche 1 bis 3, wobei die haarähnlichen Körper eine durchschnittliche Höhe von 30 µm oder mehr und 500 µm oder weniger, einen durchschnittlichen Durchmesser von 1 µm oder mehr und 50 µm oder weniger und einen durchschnittlichen Abstand zwischen den haarähnlichen Körpern von 20 µm oder mehr und 200 µm oder weniger aufweisen.

5. Geformter Gegenstand aus der Harzfolie nach einem der Ansprüche 1 bis 4.

6. Geformter Gegenstand nach Anspruch 5, wobei der geformte Gegenstand auf einer Oberfläche eines Fahrzeuginnenraummaterials, eines elektronischen Geräts, einer Verkleidung eines elektronischen Geräts, eines Kosmetikbehälters oder eines Behälterelements geformt ist.

7. Verfahren zur Herstellung des geformten Gegenstands nach Anspruch 5 oder 6, wobei das Verfahren das Vakuumformen, das Einspritzgießen oder das In-Mold-Formen der Harzfolie nach einem der Ansprüche 1 bis 4 umfasst.

## Revendications

1. Feuille de résine comprenant : une couche de surface avec des corps en forme de poils disposés régulièrement sur une de ses surfaces ; et une seconde couche directement laminée sur une surface opposée à celle des corps en forme de poils de la couche de surface, la couche de surface comprenant une résine de polyuréthane thermoplastique et la seconde couche comprenant une résine d'alliage polymère d'une résine à base de polycarbonate et d'une résine à base de polyester.

2. Feuille de résine selon la revendication 1, dans laquelle la résine de polyuréthane thermoplastique comprend un diisocyanate d'hexaméthylène (HDI) et un polyol à base de carbonate comme matières premières.

3. Feuille de résine selon la revendication 1 ou 2, dans laquelle la feuille de résine comporte en outre une couche de substrat sur une surface de la deuxième couche opposée à la surface sur laquelle la couche de surface est laminée.

4. Feuille de résine selon l'une des revendications 1 à 3, dans laquelle les corps en forme de poils ont une hauteur moyenne de 30 µm ou plus et de 500 µm ou moins, un diamètre moyen de 1 µm ou plus et de 50 µm ou moins, et un espacement moyen, entre les corps en forme de poils, de 20 µm ou plus et de 200 µm ou moins.

5. Article moulé de la feuille de résine selon l'une des revendications 1 à 4.

6. Article moulé selon la revendication 5, dans lequel l'article moulé est moulé sur une surface d'un matériau d'intérieur automobile, d'un appareil électronique, d'un revêtement d'appareil électronique, d'un récipient cosmétique ou d'un élément de récipient.

7. Méthode de fabrication de l'article moulé selon la revendication 5 ou 6, la méthode comprenant le moulage sous vide, le moulage par insertion ou le moulage dans le moule de la feuille de résine selon l'une des revendications 1 à 4.
